# EUROPEAN PATENT APPLICATION

(11) **EP 3 006 166 A1**
(43) Date of publication of application: **13.04.2016**
(21) Application number: 14804438.1
(22) Date of filing: 16.05.2014
(51) Int. Cl.: B25F 5/00

(54) **POWER TOOL**

(30) Priority: 31.05.2013 JP 2013115243
(71) Applicant: Hitachi Koki Co., Ltd., Tokyo 108-6020 (JP)
(72) Inventor: KOIZUMI, Toshiaki, Hitachinaka-City Ibaraki 312-8502 (JP); IWATA, Kazutaka, Hitachinaka-City Ibaraki 312-8502 (JP)
(74) Representative: Parker, Andrew James
(86) International application number: PCT/JP2014/063074
(87) International publication number: WO 2014/192559

(57) **Abstract**

It is an object of the invention to provide a power tool capable of preventing damage of a switching element while maintaining drive power of a motor even when being connected to a power supply of different voltage. An impact driver 1 includes a motor 3; a rectifying circuit 23; an inverter circuit 20; and an arithmetic part 24. The rectifying circuit 23 is configured to rectify an input voltage from a commercial power supply 30. The inverter circuit 20 is configured to supply a rectified voltage output from the rectifying circuit 23 to the motor 3 as drive power. The arithmetic part 24 is configured to suppress occurrence of overcurrent where current flowing through the motor exceeds a predetermined current value.

## Description

### [Technical Field]

The present invention relates to a power tool having a motor driven by a commercial AC power supply.

### [Background Art]

Conventionally, in a power tool used by being connected to a commercial AC power supply, AC power from the commercial AC power supply is rectified by a rectifying circuit and then smoothed by a smoothing capacitor. The resultant AC power is then supplied to an inverter circuit. The inverter circuit then outputs predetermined drive power and the predetermined drive power is input to a motor, whereby the motor is driven.

In recent years, a small-sized power tool not provided with the smoothing capacitor is becoming popular. It is known that, in a power tool of this type, the current value flowing through the motor suddenly increases at a timing of the maximum amplitude of AC voltage.

A voltage standard for the commercial AC power supply differs from countries to countries. Thus, for example, when a power tool of 100 V specification is connected to a 200 V high voltage commercial power supply, the current value flowing through the motor exceeds the maximum rated value of a switching element for driving the motor due to the above-mentioned sudden increase, which may damage the switching element.

To solve such a problem, PTL 1 listed below discloses a technology that changes motor control in accordance with a power supply voltage.

### [Citation List]

### [Patent Literature]

PTL 1: Japanese Patent Application Publication No. H05-317561

### [Summary of Invention]

### [Technical Problem]

In the above conventional technology, however, when the power supply voltage is higher, both a conduction rate and driving time of the motor are reduced. Consequently, drive power of the motor is disadvantageously reduced as compared to a case where the power tool is connected to a common 100 V commercial power supply.

In view of the foregoing, it is an object of the invention to provide a power tool capable of preventing damage of a switching element while maintaining drive power of a motor even when being connected to a power supply of different voltage.

### [Solution to Problem]

According to one aspect of the invention, a power tool includes a motor; a rectifying circuit; and a supply unit. The rectifying unit is configured to rectify an input voltage from a commercial power supply. The supply unit is configured to supply a rectified voltage output from the rectifying circuit to the motor as drive power. Duty control for the motor is changed according to a voltage of the commercial power supply.

With this configuration, the sudden increase in the current value flowing through the motor can be prevented even in a power supply environment different from an optimally designed input voltage, thus preventing damage of the switching element

Preferably, in the above-described power tool, a duty ratio applied to the motor is changed according to the voltage of the commercial power supply.

With this configuration, the duty ratio applied to the motor can be changed adequately even when the voltage of the commercial power supply is different, thus preventing damage of the switching element.

The duty ratio may be set to a first duty ratio when the voltage of the commercial power supply is a first voltage value, and the duty ratio may be set to a second duty ratio when the voltage of the commercial power supply is a second voltage value. The second duty ratio may be smaller than the first duty ratio.

With this configuration, the duty ratio applied to the motor can be changed adequately in accordance with the voltage of the commercial power supply, thus preventing damage of the switching element reliably. For example, preferably, the duty ratio is set to 100% for a commercial power supply having 100V power supply voltage effective value, and the duty ratio is set to 50% for a commercial power supply having 200V power supply voltage effective value.

Further, the higher the voltage of the commercial power supply is, the smaller the duty ratio may be set.

With this configuration, the duty ratio is changed adequately in accordance with the voltage of the commercial power supply. Accordingly, the sudden increase in the current value flowing through the motor can be prevented even in different power supply environments, thus preventing damage of the switching element.

The duty ratio may be maintained at constant until the voltage of the commercial power supply is a predetermined voltage, and the duty ratio may be decreased with increasing the voltage of the commercial power supply when the voltage of the commercial power supply is higher than the predetermined voltage.

With this configuration, the duty ratio is maintained at constant until the predetermined voltage. Accordingly, the drive power can be maintained. Further, the duty ratio is changed when exceeding the predetermined voltage. Accordingly, damage of the switching element can be prevented.

Preferably, in the above-described power tool, the duty ratio is decreased after the rectified voltage exceeds a voltage threshold value.

With this configuration, the power tool is controlled so that the current value flowing through the motor is decreased when the rectified voltage exceeds the voltage threshold value. Accordingly, damage of the switching element due to the sudden increase of the current value can be prevented reliably.

Further, the duty ratio may be decreased for a predetermined time duration after the rectified exceeds the voltage threshold value.

With this configuration, damage of the switching element can be prevented while maintaining the drive power.

Further, the duty ratio may be increased after the predetermined time duration.

With this configuration, excessive decrease of the drive power can be prevented while preventing damage of the switching element.

The duty ratio may be increased when the rectified voltage becomes lower than the voltage threshold value after the duty ratio is decreased.

With this configuration, decrease of the drive power can be suppressed to a minimum while reliably preventing damage of the switching element.

Further, preferably, the duty ratio is increased until the duty ratio is restored to the decreased duty ratio.

With this configuration, the drive power can be maintained.

Preferably, in the above-described power tool, the duty ratio is decreased after current flowing through the motor exceeds a current threshold value.

With this configuration, the power tool is controlled so that the current value is decreased when the current flowing through the motor exceeds the current threshold value. Accordingly, occurrence of overcurrent exceeding the maximum rated value of the switching element can be suppressed, and damage of the switching element can be prevented.

The duty ratio may be increased when the current becomes smaller than the current threshold value after the duty ratio is decreased.

With this configuration, decrease of the drive power can be suppressed to a minimum while reliably preventing damage of the switching element.

Further, preferably, the duty ratio is restored to the decreased duty ratio.

With this configuration, the drive power can be maintained.

Preferably, the higher the voltage of the commercial power supply is, the smaller the current threshold value is set.

With this configuration, the current threshold value is set in accordance with the voltage of the commercial power supply. Accordingly, the sudden increase in the current value flowing through the motor can be prevented reliably even in different power supply environments, thus preventing damage of the switching element.

Preferably, in the above-described power tool, a zero-cross point of the commercial power supply is detected; and the duty ratio is decreased when an elapsed time from detection of the zero-cross point exceeds a first time duration, and the duty ratio is increased when the elapsed time exceeds a second time duration. The second time duration is longer than the predetermined voltage.

With this configuration, the duty ratio is changed in accordance with the elapsed time from the zero-cross point. Accordingly, by simple control, the drive power can be maintained and damage of the switching element can be prevented.

Further, preferably, the higher the voltage of the commercial power supply is, the shorter the first time duration is set.

With this configuration, damage of the switching element can be prevented even in different power supply environments.

In the above-described power tool, the rectified voltage is supplied to the supply unit without being smoothed.

With this configuration, a small-sized power tool adaptable to various power supply environments can be provided.

According to another aspect of the invention, a power tool includes a motor; a supply unit; and a suppression unit. The supply unit is configured to supply drive power from a power supply to the motor. The suppression unit is configured to suppress occurrence of overcurrent where current flowing through the motor exceeds a predetermined current value.

With this configuration, occurrence of the overcurrent exceeding the maximum rated value of the switching element can be suppressed. Accordingly, damage of the switching element can be prevented.

In the above-described power tool, the suppression unit may include a change unit. The change unit may be configured to change an effective value of the drive power.

With this configuration, the drive power applied to the motor can be changed adequately. Accordingly, the drive power of the motor can be maintained while preventing damage of the switching element.

The above-stated power tool may further include a current detection unit. The current detection unit may be configured to detect current value input to the supply unit. Preferably, in the power tool, the change unit is configured to decrease the effective value when the current value detected by the current detection unit exceeds a current threshold value.

With this configuration, the power tool is controlled so that the current value flowing through the motor is decreased when the current value flowing through the supply unit exceeds the current threshold value. Accordingly, damage of the switching element can be prevented reliably while suppressing occurrence of the overcurrent.

Further, the power tool may further include a current detection unit. The current detection unit may be configured to detect current value input to the supply unit. Preferably, in the power tool, the change unit is configured to set the current threshold value according to the power supply voltage effective value detected by the power supply voltage detection unit.

With this configuration, even for different power supply voltage, damage of the switching element can be prevented while maintaining the drive power.

The above-described power tool may further include an input voltage detection unit. The input voltage detection unit may be configured to detect instantaneous voltage value input to the supply unit. Preferably, in the power tool, the change unit is configured to decrease the effective value when the instantaneous voltage value detected by the input voltage detection unit exceeds a voltage threshold value.

With this configuration, the power tool is controlled so that the current value flowing through the motor is decreased when the instantaneous voltage value input to the supply unit exceeds the voltage threshold value. Accordingly, damage of the switching element due to the overcurrent van be prevented reliably.

Further, the power tool may further include a power supply voltage detection unit. The power supply voltage detection unit may be configured to detect power supply voltage effective value of the power supply. Preferably, in the power tool, the change unit is configured to set the voltage threshold value according to the power supply voltage effective value detected by the power supply voltage detection unit

With this configuration, even when being connected to a power supply of different voltage, damage of the switching element can be prevented while maintaining the drive power.

The above-described power tool may further include a zero-cross detection unit. The zero-cross detection unit may be configured to detect a zero-cross point of AC power input to the supply unit. Preferably, in the power tool, the change unit is configured to decrease the effective value when an elapsed time from detection of the zero-cross point exceeds a first time threshold value, and increase the effective value when the elapsed time exceeds a second time threshold value larger than the first time threshold value.

With this configuration, the drive power is changed in accordance with the elapsed time from the zero-cross. Accordingly, by simple control, the drive power can be maintained and damage of the switching element can be prevented.

Further, the power tool may further include a power supply voltage detection unit; and a period detection unit. The power supply voltage detection unit may be configured to detect a power supply voltage effective value of the power supply. The period detection unit may be configured to detect a half period of the AC power. Preferably, in the power tool, the change unit is configured to set the first time threshold value according to the power supply voltage effective value detected by the power supply voltage detection unit, and set a value obtained by subtracting the first time threshold value from the half period detected by the period detection unit as the second time threshold value.

With this configuration, even when being connected to a power supply of different voltage, damage of the switching element can be prevented while maintaining the drive power.

In the above-described power tool, the supply unit may be an inverter circuit, and the change unit may be configured to change a duty ratio of the drive power supplied from the inverter circuit to the motor.

Further, in the above-described power tool, the power supply is a commercial power supply, and the supply unit is configured to supply a voltage of the commercial power supply to the motor without smoothing the voltage.

With this configuration, a small-sized power tool adaptable to various power supply environments can be provided.

### [Advantageous Effects of Invention]

The invention provides a power tool capable of preventing damage of a switching element while maintaining drive power of a motor even when being connected to a power supply of different voltage.

### [Brief Description of Drawings]

[Fig. 1] Fig. 1 is a cross-sectional view of an impact driver according to embodiments;
[Fig. 2] Fig. 2 is a control block diagram of a motor in the impact driver according to the embodiments;
[Fig. 3] Fig. 3 is a diagram illustrating a relationship between a power supply voltage and PWM duty according to specification of the motor;
[Fig. 4] Fig. 4 is a diagram illustrating a relationship between a power supply voltage effective value and the PWM duty in the impact driver according to the embodiments;
[Fig. 5] Fig. 5 is a diagram for explaining soft start control;
[Fig. 6] Fig. 6 is a diagram illustrating a relationship between the power supply voltage effective value and a current threshold value in an impact driver according to a first embodiment;
[Fig. 7] Fig. 7 is a flowchart illustrating operation of the impact driver according to the first embodiment;
[Fig. 8] Figs. 8A, 8B and 8C are explanatory diagrams illustrating an example of drive control for the motor in the first embodiment; Fig. 8A illustrates a temporal change of voltage to be applied to the motor; Fig. 8B illustrates a temporal change of current flowing through the motor; Fig. 8C illustrates a temporal change of PWM duty D;
[Fig. 9] Figs. 9A and 9B are diagrams illustrating a power supply voltage waveform after rectification and a motor current waveform; Fig. 9A illustrates a voltage instantaneous value V after rectification detected by a voltage detection circuit; Fig. 9B illustrates a current value I of motor current flowing through the motor detected by a current detection circuit;
[Fig. 10] Fig. 10 is a diagram illustrating a relationship between the PWM duty and the motor current in the first embodiment;
[Fig. 11] Fig. 11 is a diagram illustrating a relationship between a power supply voltage effective value and a voltage threshold value in an impact driver according to a second embodiment;
[Fig. 12] Fig. 12 is a flowchart illustrating operation of the impact driver according to the second embodiment.
[Fig.13] Figs. 13A, 13B and 13C are explanatory diagrams illustrating an example of drive control for a motor in the second embodiment; Fig. 13A illustrates a temporal change of voltage to be applied to the motor; Fig. 13B illustrates a temporal change of current flowing through the motor; Fig. 13C illustrates a temporal change of PWM duty D;
[Fig. 14] Fig. 14 is a diagram illustrating a relationship among voltage after rectification, PWM duty, and motor current at a power supply voltage of 100 V;
[Fig. 15] Fig. 15 is a diagram illustrating a relationship among voltage after rectification, PWM duty, and motor current at a power supply voltage of 200 V;
[Fig. 16] Fig. 16 is a diagram illustrating a relationship among voltage after rectification, PWM duty, and motor current at a power supply voltage of 230 V;
[Fig. 17] Fig. 17 is a diagram illustrating a relationship between a power supply voltage effective value and a duty switching timing in an impact driver according to a third embodiment;
[Fig. 18] Fig. 18 is a flowchart illustrating operation of the impact driver according to the third embodiment;
[Fig. 19] Figs. 19A, 19B and 19C are explanatory diagrams illustrating an example of drive control for a motor in the third embodiment; Fig. 19A illustrates a temporal change of voltage to be applied to the motor; Fig. 19B illustrates a temporal change of current flowing through the motor; Fig. 19C illustrates a temporal change of PWM duty; and
[Fig. 20] Fig. 20 is a flowchart illustrating operation of an impact driver according to a fourth embodiment.

### [Description of Embodiments]

A power tool according to embodiments will be described while referring to the accompanying drawings wherein lie parts and components are designated by the same reference numerals to avoid duplicating description. The following description will be made taking an impact driver as an example of a power tool of the present invention.

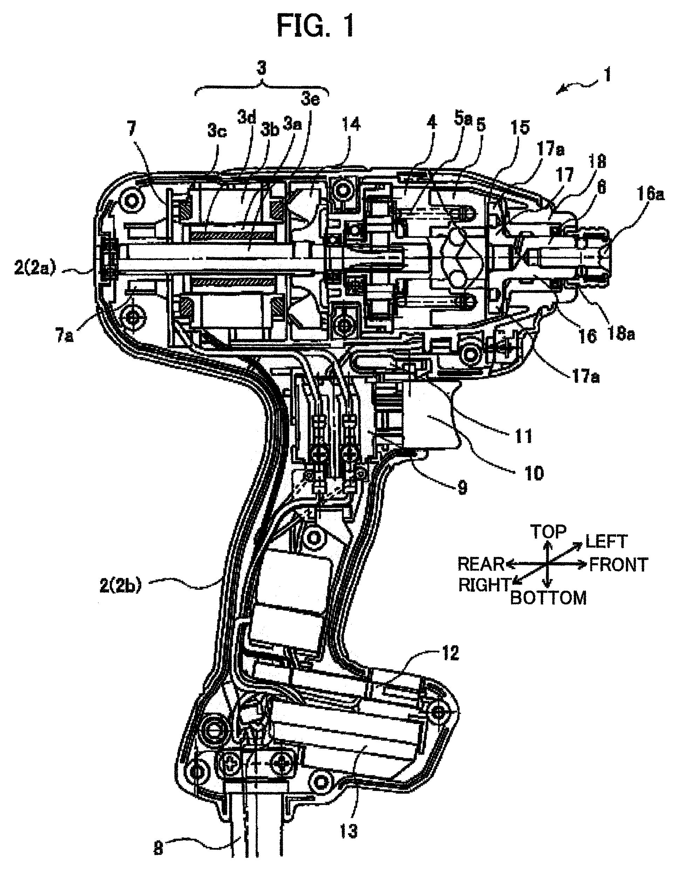

Fig. 1 is a cross-sectional view of an impact driver according to embodiments. An impact driver 1 corresponds to a power tool of the present invention and, as illustrated in Fig. 1, mainly includes a housing 2, a motor 3, a gear mechanism 4, a hammer 5, an anvil part 6, an inverter circuit part 7, and a power cord 8.

The housing 2 is made of resin and constitutes an outer bailey of the impact driver 1. The housing 2 mainly includes a substantially cylindrical shaped body part 2a and a handle part 2b extending from the body part 2a. Inside the body part 2a, as illustrated in Fig. 1, the motor 3 is disposed such that an axial direction thereof coincides with a longitudinal direction of the body part 2a, and the gear mechanism 4, hammer 5, and anvil part 6 are arranged in this order toward one side in the axial direction of the motor 3.

A metal hammer casing 18 is disposed at a front side position of the body part 2a and incorporates the hammer 5 and the anvil part 6. The hammer casing 19 is formed into a substantially funnel shape whose diameter is gradually reduced toward the front and has an opening 18a at a front end portion thereof. A front end portion of an end bit holding part 16 to be described later is exposed from the opening 18a, and an opening portion 16a is formed to the tip of the front end portion of the end bit holding part 16. The body part 2a further has intakes (not shown) through which external air is introduced into the body part 2a by a cooling fan 14 to be described later and outtakes (not shown) through which the introduced air is exhausted by the cooling fan 14. The motor 3 and the inverter circuit part 7 are cooled by the external air.

The handle part 2b extends downward from a center portion of the body part 2a in the front-rear direction and formed integrally with the body part 2a. A switch mechanism 9 is incorporated inside the handle part 2b, and the power cord 8 connectable to an AC power supply extends from a distal end portion of the handle part 2b in the extending direction thereof. A trigger switch 10 which is an operation part to be operated by an operator is provided at a front side position of a root portion of the handle part 2b. The trigger switch 10 is connected to the switch mechanism 9 and allows switching between supply and interruption of drive power to the motor 3. A forward/reverse selector switch 11 for switching a rotation direction of the motor 3 is provided at a connection between the handle part 2b and the body part 2a, i.e., a portion located just above the trigger switch 10. Further, a control circuit part 12 and a power supply circuit part 13 are housed below the handle part 2b.

The motor 3 is a brushless motor and mainly includes a rotor 3a and a stator 3b, as illustrated in Fig. 1. The rotor 3a has an output shaft 3e and a plurality of permanent magnets 3d. The output shaft 3e is disposed inside the body part 2a such that the axial direction thereof coincides with the front-rear direction. The output shaft 3e protrudes from the rotor 3a to both the front and rear sides and is rotatably supported to the body part 2a by a bearing at the protruding portion. The stator 3b is disposed opposite to the rotor 3a and has a plurality of coils 3c. A cooling fan 14 is provided at a portion at which the output shaft 3e protrudes to the front side. The cooling fan 14 rotates coaxially and integrally with the output shaft 3e.

The gear mechanism 4 is disposed frontward of the motor 3. The gear mechanism 4 is a deceleration mechanism constituted by a planetary gear mechanism including a plurality of gears and transmits rotation of the output shaft 3e to the hammer 5 after decelerating the rotation. The hammer 5 has a pair of hitting parts 15 at a front end thereof. The hammer 5 is urged frontward by a spring 5a and configured to be movable also rearward against the urging force of the spring 5a.

The anvil part 6 is disposed frontward of the hammer 5 and mainly includes the end bit holding part 16 and an anvil 17. The anvil 17 is positioned rearward of the end bit holding part 16 and is formed integrally with the end bit holding part 16. The anvil 17 has a pair of hit parts 17a disposed at opposed positions with respect to a rotation center of the end bit holding part 16. When the hammer 5 is rotated, one hitting part 15 hits one hit part 17a, and the other hitting part 15 hits the other hit part 17a, causing torque of the hammer 5 to be transmitted to the anvil 17, with the result that hitting is given to the anvil 17. After hitting of the hitting parts 15 against the hit parts 17a, the hammer 5 is moved rearward against the urging force of the spring 5a while being rotated. Then, when the hitting parts 15 override the hit parts 17a, elastic energy stored in the spring 5a is released to move the hammer 5 frontward, with the result that the hitting parts 15 hit once again the hit parts 17a. An end bit is detachably held at the opening portion 16a formed at the front end of the end bit holding part 16.

The inverter circuit part 7 has switching elements 7a such as MOSFETs (Metal Oxide Semiconductor Field Effect Transistors), IGBTs (Insulated Gate Bipolar Transistors) or the like. The power cord 8 is connected to an AC power supply (not shown) to thereby supply power to the above-described constituent elements.

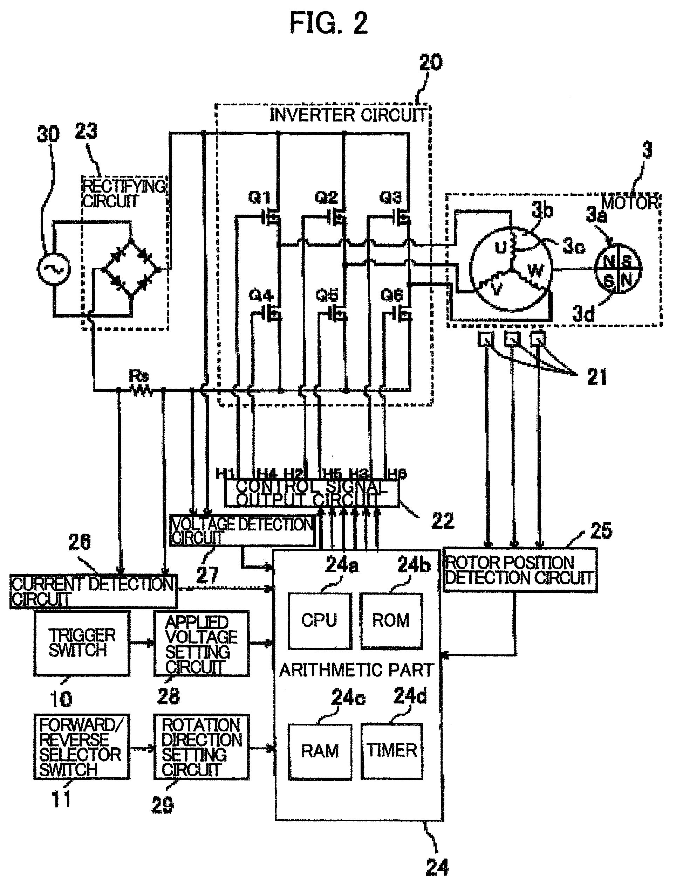

Next, a configuration of a drive control system for the motor 3 will be described while referring to Fig. 2. Fig. 2 is a control block diagram of the motor in the impact driver according to the embodiments.

In the present embodiment, the motor 3 is a three-phase brushless motor. The rotor 3a of the brushless motor includes a plurality of (two, in the present embodiment) sets of permanent magnets 3d each having N and S poles, and the stator 3b includes a three-phase stator windings (coil 3c) U, V, and W which are star-connected. Hall elements 21 are disposed opposite to the permanent magnets 3d. Based on position detection signals from the hall elements 21, conduction direction and time of current to the stator windings U, V, and W are controlled.

The inverter circuit part 7 (Fig. 1) includes an inverter circuit 20. Electronic elements mounted on a substrate of the inverter circuit 20 include six switching elements 7a (Q1 to Q6) such as FETs connected in a three-phase bridge configuration. Gates of the six respective switching elements Q1 to Q6 which are bridge-connected to each other are connected to a control signal output circuit 22, and drains or sources of the respective switching elements Q1 to Q6 are connected to the star-connected stator windings U, V, and W. With this configuration, the six switching elements Q1 to Q6 perform switching operation on the basis of switching element drive signals. (drive signals such as H4, H5, and H6) input from the control signal output circuit 22 and turns DC voltage that has been full-wave rectified by a rectifying circuit 23 into three-phase (U-phase, V-phase, and W-phase) voltage Vu, Vv, and Vw, to thereby supply power to the stator windings U, V, and W.

The control signal output circuit 22 supplies switching element drive signals that drive three negative power supply side switching elements Q4, Q5, and Q6 among the switching element drive signals (three-phase signals) that drive the gates of the six switching elements Q1 to Q6, as pulse width modulation signals (PWM signals) H4, H5, and H6. Then, an arithmetic part 24 provided in the control circuit part 12 changes pulse widths (duty ratio) of the PWM signals on the basis of detection signals of a manipulation amount (stroke) of the trigger switch 10 to adjust an amount of power supply for the motor 3, thereby controlling start/stop and rotation speed of the motor 3. Further, the control signal output circuit 22 supplies switching element drive signals that drive three positive power supply side switching elements Q1, Q2, and Q3 as output switching signals H1, H2, and H3.

The PWM signals are supplied to either the positive power supply side switching elements Q1 to Q3 or the negative power supply side switching elements Q4 to Q6 of the inverter circuit 20 to switch the switching elements Q1 to Q3 or switching elements Q4 to Q6 at high speed, thereby controlling power to be supplied from the DC voltage of the rectifying circuit 23 to the stator windings U, V, and W. In the present embodiment, the PWM signals are supplied to the negative power supply side switching elements Q4 to Q6 to control the pulse widths of the PWM signals, thereby making it possible to adjust power to be supplied to the stator windings U, V, and W and then to control the rotation speed of the motor 3. A configuration may be employed, in which the PWM signals H4, H5, and H6 are output to the positive power supply side switching elements Q1 to Q3, and the output switching signals H1, H2, and H3 are output to the negative power supply side switching elements Q4 to Q6. Further, the PWM signals H1 to H6 may be output to their corresponding switching elements Q1 to Q6 at different timings.

The control circuit part 12 (Fig. 1) includes a control signal output circuit 22, a rotor position detection circuit 25, a current detection circuit 26, a voltage detection circuit 27, an applied voltage setting circuit 28, a rotation direction setting circuit 29, and an arithmetic part 24.

The rotor position detection circuit 25 detects a rotation position of the rotor 3a on the basis of signals from the hall elements 21 and outputs the detected rotation position to the arithmetic part 24.

The current detection circuit 26 measures a current value to be supplied to the motor 3 by using a shunt resistor Rs and outputs the measured current value to the arithmetic part 24. The current detection circuit 26 is an example of a current detection unit of the present invention and measures a current value I input to the inverter circuit 20 and outputs the measured current value I to the arithmetic part 24.

The voltage detection circuit 27 measures a voltage value to be applied to the motor 3 and outputs the measured voltage value to the arithmetic part 24. The voltage detection circuit 27 is an example of an input voltage detection unit of the present invention and measures a voltage instantaneous value V to be input to the inverter circuit 20 and outputs the measured value V to the arithmetic part 24. Further, the voltage detection circuit 27 is also an example of a power supply voltage detection unit of the present invention and measures a power supply voltage effective value Ve of a commercial AC power supply 30 and outputs the measured value Ve to the arithmetic part 24.

The applied voltage setting circuit 28 outputs a control signal to the arithmetic part 24 on the basis of an operation to the trigger switch 10. The rotation direction setting circuit 29 outputs a signal for switching the rotation direction of the motor 3 to the arithmetic part 24 upon detecting the switching of the forward/reverse selector switch 11.

The arithmetic part 24 includes a central processing unit (CPU) 24a for outputting a drive signal on the basis of a processing program and data, a ROM 4b for storing the processing program, control data, and various threshold values, a RAM 24c for temporality storing data, and a timer 24d. The control signal output circuit 22 and the arithmetic part 24 correspond to a suppression unit of the present invention, and the arithmetic part 24 corresponds to a change unit of the present invention.

The arithmetic part 24 generates the PWM signals H4 to H6 on the basis of the output from the applied voltage setting circuit 28 and outputs the generated PWM signals to the control signal output circuit 22. Further, the arithmetic part 24 generates the output switching signals H1 to H3 on the basis of the outputs from the rotor position detection circuit 25 and the rotation direction setting circuit 29. As a result, predetermined windings of the stator windings U, V, and W are alternately electrically conducted, causing the rotor 3a to rotate in a set rotation direction. The voltage and current values to be supplied to the motor 3 are measured by the current detection circuit 26 and the voltage detection circuit 27, respectively, and the measured values are fed back to the arithmetic part 24, whereby a set drive power and a set current value can be obtained.

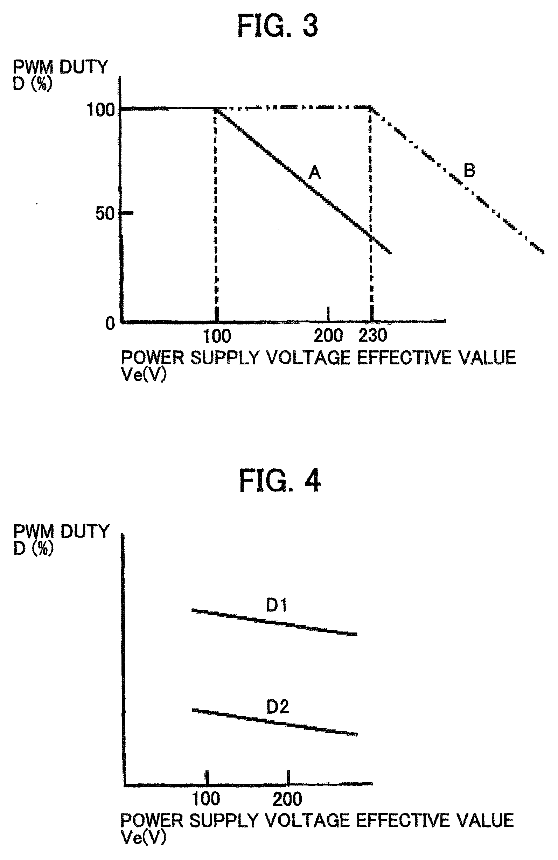

The ROM 24b of the arithmetic part 24 stores the duty ratio indicating the pulse width of the PWM signal, i.e., data for controlling PWM duty. This control data will be described with reference to Figs. 3 and 4. Fig. 3 is a diagram illustrating a relationship between the power supply voltage and PWM duty according to specification of the motor, and Fig. 4 is a diagram illustrating a relationship between the power supply voltage effective value and PWM duty in the impact driver according to the embodiments.

In the impact driver 1, the motor 3 is designed to be optimum for a power supply environment where the power supply voltage is set to 100 V. For example, a wire diameter of the coil 3c is set to 0.5 mm, and the number of turns thereof is set to 50 per one pole (hereinafter, referred to as "50/pole"), The current easily flows through this motor 3, so that when the impact driver 1 is used at an input voltage effective value higher than 100 V, e.g., 230 V or higher, a current value may suddenly increase.

On the other hand, the switching elements 7a (Q1 to Q6) constituting the inverter circuit 20 are designed for a voltage effective value of 100 V. Thus, when the impact driver 1 is used at a voltage effective value higher than 100 V, the current value may suddenly increase to cause current exceeding the maximum rated value of the switching elements 7a to flow through the switching elements 7a, which may damage the switching elements 7a.

Thus, when the impact driver 1 is used at a power supply voltage of 230V, the specification of the motor 3 is changed such that the wire diameter of the coil 3c is set to 0.35 5 mm and the number of turns thereof is set to 100/pole. As a result, the same performance (torque) as the motor 3 of 100V specification can be obtained, and the current can be made difficult to flow. However, a size of the motor 3 itself is disadvantageously increased. In addition, it is necessary to reduce the wire diameter, so that a possibility that the coil 3c may be broken due to vibration becomes higher.

Thus, in the present invention, control for the inverter circuit 20 is changed according to the power supply environment so as to allow the impact driver 1 to be applicable to different power supply environments without changing the specification of the motor 3. That is, as illustrated in Fig. 3, a PWM duty D of the switching element 7a of the inverter circuit 20 is changed according to the power supply voltage effective value Ve.

In Fig. 3, a solid line A indicates a relationship between the power supply voltage effective value Ve and the PWM duty D when the motor 3 of 100 V specification, in which the wire diameter of the coil 3c is set to 0.5mm and the number of turns thereof is set to 50/pole is used. As illustrated in Fig. 3, when the input voltage effective value to the motor 3 exceeds 100 V, the inverter circuit 20 is controlled such that the PWM duty D is reduced according to the power supply voltage effective value Ve. On the other hand, when the motor 3 designed to be optimum for a power supply environment where the power supply voltage is set to 230 V, that is, the motor 3 in which the wire diameter of the coil 3c is set to 0.35mm, and the number of turns thereof is set to 115/pole is used, the inverter circuit 20 is controlled such that the PWM duty D is reduced according to the power supply voltage effective value Ve when the input voltage effective value to the motor 3 exceeds 230V, as indicated by a long dashed double-dotted line.

By controlling the inverter circuit 20 as described above, the sudden increase in the current value flowing through the motor 3 can be prevented even in a power supply environment higher than an optimally designed input voltage, thus preventing damage of the switching element 7a.

In the impact driver 1 according to the embodiments, the arithmetic part 24 refers to data illustrated in Fig. 4 to set the PWM duty according to the power supply voltage of the commercial AC power supply 30. Specifically, two PWM duties according to the power supply voltage effective value Ve of the commercial AC power supply 30, i.e., a first duty D1 and a second duty D2 are set. The first duty D1 corresponds to the PWM duty D illustrated in Fig. 3 and is set according to the specification of the motor 3 and power supply voltage effective value Ve. The second duty D2 is set according to the first duty D1. In the embodiments, the first and second duties D1 and D2 satisfy a relational expression of D2 < 0.5 × D1. Further, the first and second duties D1 and D2 are each reduced as the power supply voltage effective value Ve becomes higher. The arithmetic part 24 performs switching control for the two PWM duties. Details of the PWM duty switching control will be described later.

The following describes in detail the impact driver 1 according to a first embodiment. In the present embodiment, the impact driver 1 performs switching of the PWM duty D on the basis of the current value I input to the inverter circuit 20.

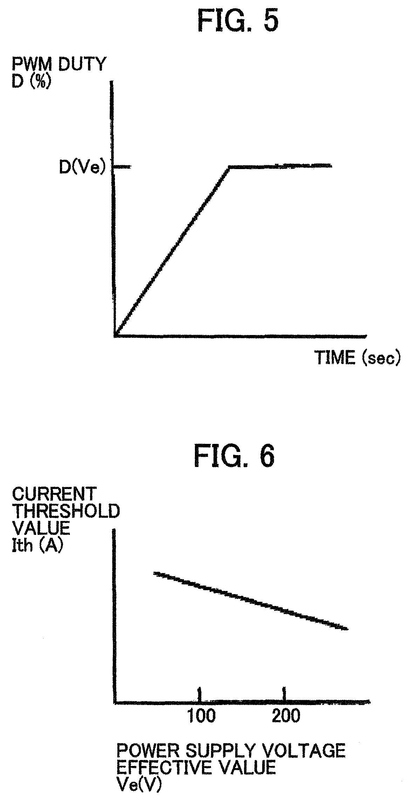

The arithmetic part 24 performs soft start control that gradually increases the PWM duty from an initial value to a target value when the motor 3 is started. Fig. 5 is a diagram for explaining the soft start control. As illustrated in Fig. 5, the arithmetic part 24 increases the PWM duty D from a predetermined initial value D0 to a target value at a certain increasing rate α (α > 0). In the present embodiment, the target value of the PWM duty D is the first duty D 1.

In the present embodiment, the ROM 24b of the arithmetic part 24 stores a current threshold value Ith corresponding to the power supply voltage effective value Ve. Fig. 6 is a diagram illustrating a relationship between the power supply voltage effective value and a current threshold value in the impact driver according to the first embodiment. As illustrated in Fig. 6, the current threshold value Ith stored in the arithmetic part 24 is reduced as the power supply voltage effective value Ve becomes higher. The arithmetic part 24 sets the current threshold value Ith according to the power supply voltage effective value Ve of the commercial AC power supply 30. Then, the arithmetic part 24 performs switching of the PWM duty D on the basis of the set current threshold value Ith.

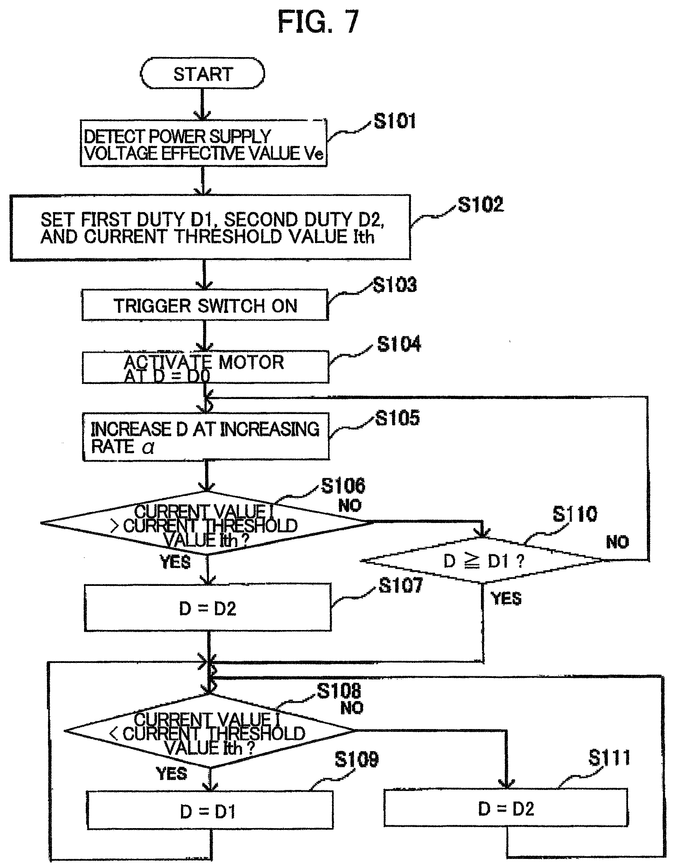

The following describes an operation of changing the PWM duty D in the impact driver 1 according to the first embodiment along a flowchart illustrated in Fig. 7. Fig. 7 is a flowchart illustrating operation of the impact driver according to the first embodiment.

The flowchart of Fig. 7 is started when the power cord 8 is connected to the commercial AC power supply 30. The voltage detection circuit 27 measures the power supply voltage effective value Ve of the commercial AC power supply 30 and outputs the measured value Ve to the arithmetic part 24 (S101).

Subsequently, the arithmetic part 24 sets the first and second duties D1 and D2 (S102). The arithmetic part 24 sets the two PWM duties D1 and D2 corresponding to the power supply voltage effective value Ve on the basis of the data illustrated in Fig. 4. The higher the power supply voltage effective value Ve is, the smaller the PWM duties D1 and D2 become. Further, the arithmetic part 24 sets the current threshold value Ith (S102). The arithmetic part 24 sets the current threshold value Ith corresponding to the power supply voltage effective value Ve on the basis of the data illustrated in Fig. 6. The higher the power supply voltage effective value Ve is, the smaller the current threshold value Ith becomes.

Thereafter, when the trigger switch 10 is turned ON (S103), the PWM duty D is set to the initial value D0, and the motor 3 is activated (S104). The arithmetic part 24 performs the soft start control to gradually increase the PWM duty D from the initial value D0 to the target value D1 at a certain increasing rate α (S105).

Further, the arithmetic part 24 monitors the current value I output from the current detection circuit 26. Then, when the current value I to be input to the inverter circuit 20 exceeds the current threshold value Ith corresponding to the power supply voltage (S106: YES), the arithmetic part 24 sets the PWM duty D to the second duty D2 (S107), Thereafter, when the current value I falls below the current threshold value Ith (S108: YES), the arithmetic part 24 switches the current PWM duty D from the second duty D2 to the first duty D1(S109).

When the PWM duty D reaches the first duty D1 (S110: YES) before the current value I reaches the current threshold value Ith (S106: NO) during the increase in the PWM duty D by the soft start control, the arithmetic part 24 stops increasing the PWM duty D and maintains the same at the first duty D1. When the PWM duty D is less than the first duty D1 (S110: NO), the arithmetic part 24 continues increasing the PWM duty D (S105) until the PWM duty D reaches the first duty D1 (S110: YES) or until the current value I reaches the current threshold value Ith (S106: YES).

Then, when the current value I exceeds the current threshold value Ith (S108: NO) after maintaining the PWM duty D at the first duty D1 (S110: YES), the arithmetic part 24 switches the PWM duty D from the first duty D1 to the second duty D2 (S111). Thereafter, when the current value I falls below the current threshold value Ith (S108: YES), the arithmetic part 24 switches the PWM duty D from the second duty D2 to the first duty D1 (S109).

As described above, when the current value I to be input to the inverter circuit 20 exceeds the current threshold value Ith, the PWM duty D is reduced to the second duty D2. When the current value I is less than the current threshold value Ith, the PWM duty D is increased to the first duty D1.

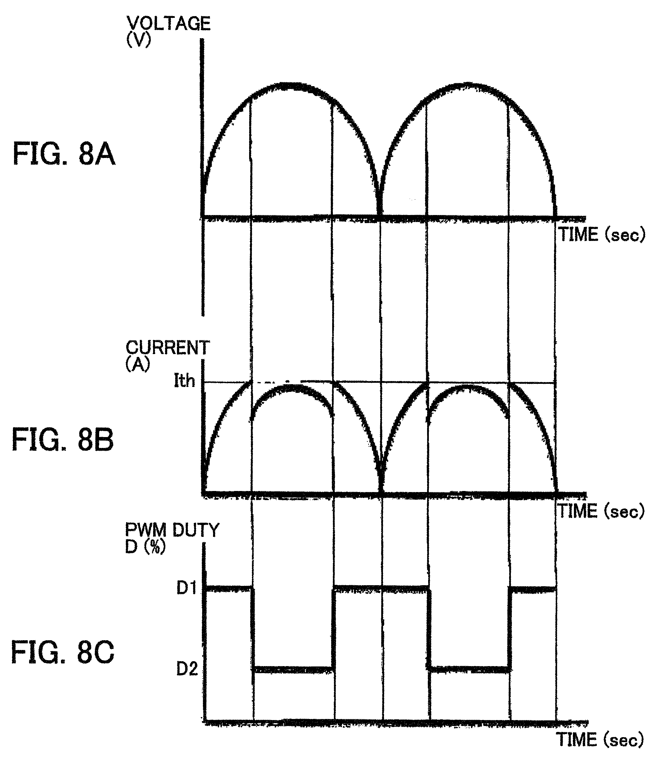

Figs. 8A to 8C are explanatory diagrams illustrating an example of drive control for the motor in the first embodiment. Fig. 8A illustrates a temporal change of the voltage to be applied to the motor 3, and Fig. 8B illustrates a temporal change of the current flowing through the motor 3. Fig. 8C illustrates a temporal change of the PWM duty D.

In the present embodiment, when the current value I to be input to the inverter circuit 20 exceeds the current threshold value Ith, the PWM duty D is reduced from the first duty D1 to the second duty D2 (Fig. 8C). Accordingly, the current value flowing through the motor 3 is reduced (Fig. 8B). Thereafter, the PWM duty is maintained at the second duty D2 until the maximum amplitude of the voltage to be applied to the motor 3 passes and the current value I to be input to the inverter circuit 20 is reduced to the current threshold value Ith. Therefore, even when the sudden increase in the current value occurs at the maximum amplitude of the voltage to be applied to the motor 3, the current value flowing through the motor 3 does not exceed the maximum rated value of the switching element 7a, thereby preventing damage of the switching element 7a.

When the current value I to be input to the inverter circuit 20 is reduced to the current threshold value Ith, the PWM duty is increased from the second duty D2 to the first duty D1 (Fig. 8C). Accordingly, the current value flowing through the motor 3 becomes large (Fig. 8B), and the effective value of the voltage to be applied to the motor 3 also becomes large. Therefore, excessive reduction of an amount of drive power to be supplied to the motor 3 can be prevented.

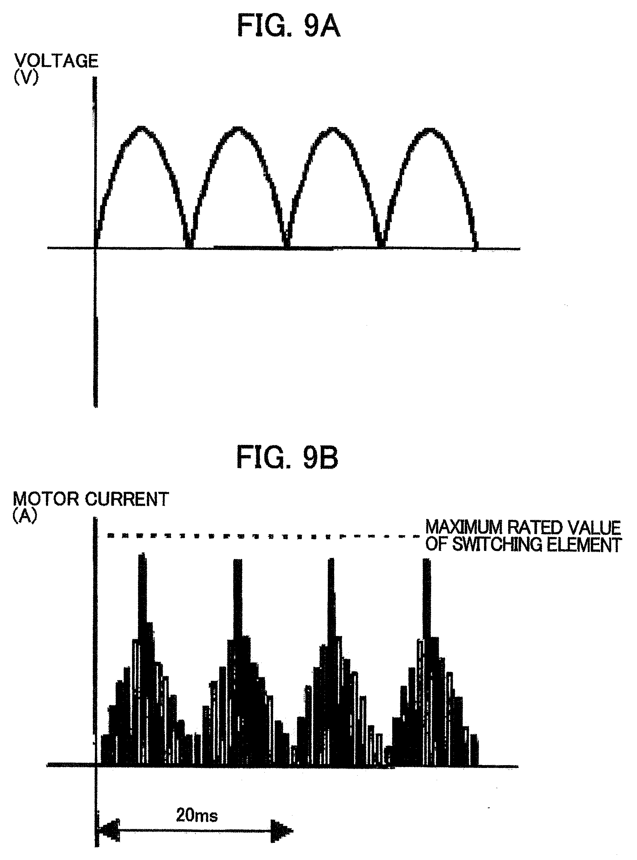

Figs. 9A and 9B are diagrams illustrating a power supply voltage waveform after rectification and a motor current waveform. Figs. 9A and 9B correspond to a case where the power supply voltage effective value is 100 V, and a power supply frequency is 50Hz. Fig. 9A represents a voltage instantaneous value V of the power supply voltage after rectification which is detected by the voltage detection circuit 27, and Fig. 9B represents a current value I of the motor current flowing through the motor 3 which is detected by the current detection circuit 26. As illustrated in Figs. 9A and 9B, although the motor current suddenly increases around a peak of the power supply voltage, the switching element 7a is designed or selected considering the sudden increase in the motor current. However, in a case where the power supply voltage effective value Ve is 100 V or more, e.g., 200 V, the sudden increase of the motor current I becomes too large, causing current exceeding the maximum rated value of the switching element 7a to flow through the switching element 7a.

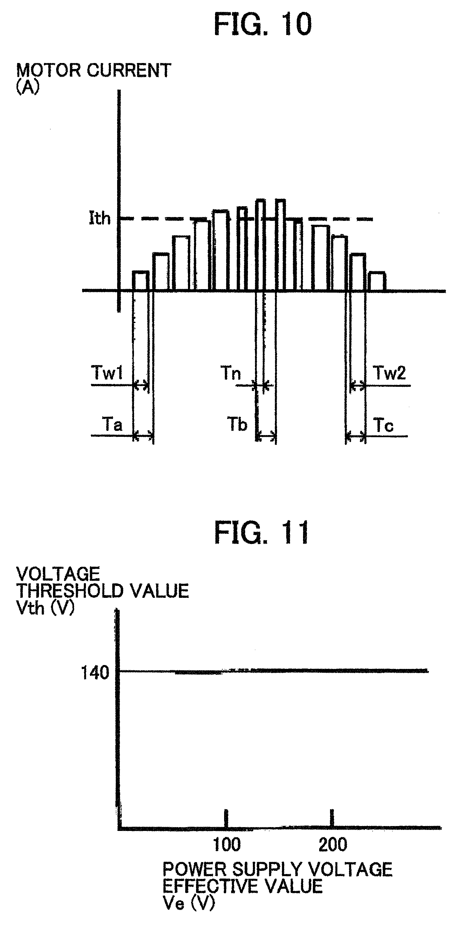

Thus, in the present embodiment, as illustrated in Fig. 10, a current threshold value Ith smaller than the maximum rated value of the switching element 7a is set. When the motor current I exceeds the current threshold value Ith, the PWM duty D is reduced. Fig. 10 is a diagram illustrating a relationship between the PWM duty and motor current in the first embodiment. Fig. 10 represents a half period of a motor current waveform. Further, in Fig. 10, Tw1, Tw2, and Tn are each an ON-time of the PWM duty, and Ta, Tb, and Tc are each a PWM period. The current threshold value Ith may be previously determined by experiments or the like and stored in the ROM 24b.

The PWM duty D1 (= Tw1/Ta) is set to substantially 100 % until the motor current I reaches the current threshold value Ith. When the motor current I reaches the current threshold value Ith, the PWM duty is reduced from D1 to D2 (= Tn/Tb). Thereafter, when the motor current I falls below the current threshold value Ith, the PWM duty is set to D1 (= Tw2/Tc). The ON-time Tw1, Tw2, and Tn of the PWM duty have a relationship of Tn < Tw1 = Tw2, and the PWM period Ta, Tb, and Tc have a relationship of Ta = Tb = Tc.

As described above, when the motor current I exceeds the current threshold value Ith, the PWM duty D is changed to reduce the duty ratio, whereby, as illustrated in Fig. 8B, the sudden increase in the current value can be prevented to prevent damage of the switching element 7a. Further, the larger the power supply voltage effective value Ve becomes, the larger the motor current I becomes to make the sudden increase in the current large. Thus, the ON-time Tn of the PWM duty D when the motor current I exceeds the current threshold value Ith is changed according to the power supply voltage to reduce the ON-time Tn as the power supply voltage effective value Ve becomes larger, whereby a range of reduction (|D1-D2| in Fig. 8C) of the PWM duty D is increased. With this configuration, the switching element 7a can be prevented from being damaged under any power supply voltage environment. As described above, in the impact driver according to the first embodiment, the PWM duty is reduced only when the current value to be input to the inverter circuit exceeds the current threshold value. This can suppress the current value to be input to the inverter circuit without excessively reducing the drive power to be supplied to the motor. Thus, occurrence of overcurrent exceeding the maximum rated value of the switching element can be prevented while maintaining the motor drive power to thereby prevent damage of the switching element.

Next, the impact driver 1 according to a second embodiment will be described. In the present embodiment, the impact driver 1 performs switching of the PWM duty D on the basis of the voltage instantaneous value V to be input to the inverter circuit 20.

In the present embodiment, the ROM 24b of the arithmetic part 24 stores a voltage threshold value Vth corresponding to the power supply voltage effective value Ve. Fig. 11 is a diagram illustrating a relationship between the power supply voltage effective value and voltage threshold value in the impact driver according to the second embodiment. In the present embodiment, as illustrated in Fig. 11, the voltage threshold value Vth stored in the arithmetic part 24 assumes a fixed value of 140V when the power supply voltage effective value Ve falls between 100 V and 200 V. The arithmetic part 24 sets the voltage threshold value Vth according to the power supply voltage effective value Ve of the commercial AC power supply 30. Then, the arithmetic part 24 performs switching of the PWM duty D on the basis of the set voltage threshold value Vth. The voltage threshold value Vth may be set so as to become smaller as the power supply voltage becomes higher.

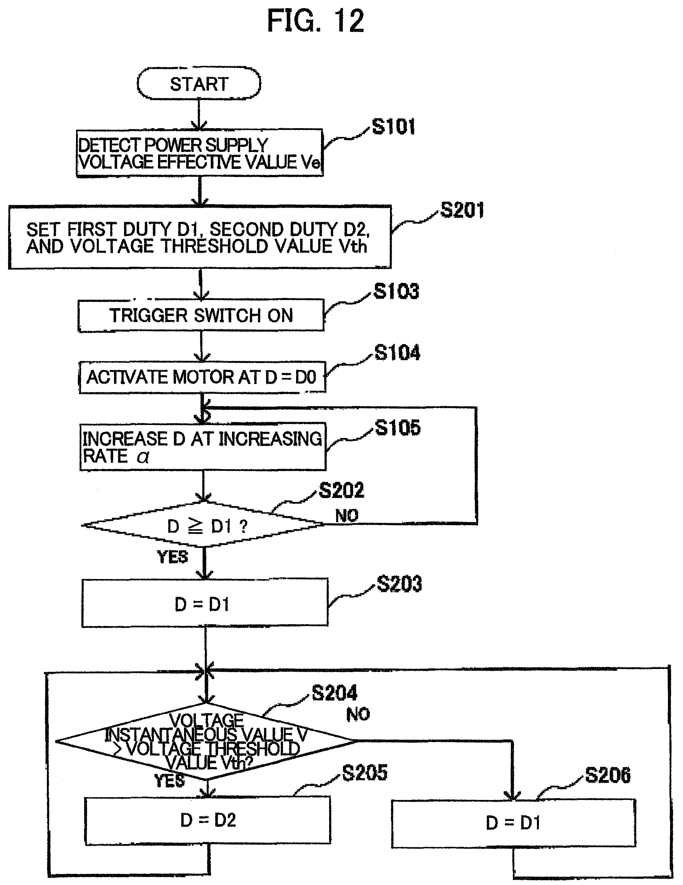

The following describes an operation of changing the PWM duty in the impact driver 1 according to the second embodiment along a flowchart illustrated in Fig. 12. Fig. 12 is a flowchart illustrating operation of the impact driver according to the second embodiment.

The flowchart of Fig. 12 is started when the power cord 8 is connected to the commercial AC power supply 30. The voltage detection circuit 27 measures the power supply voltage effective value Ve of the commercial AC power supply 30 and outputs the measured value Ve to the arithmetic part 24 (S101).

Subsequently, the arithmetic part 24 sets the first and second duties D1 and D2 corresponding to the power supply voltage effective value Ve on the basis of the data illustrated in Fig. 4 (S201). Further, the arithmetic part 24 sets the voltage threshold value Vth (S201). The arithmetic part 24 sets the voltage threshold value Vth corresponding to the power supply voltage effective value Ve on the basis of the data illustrated in Fig. 11. In the present embodiment, 140 V is set as the voltage threshold value Vth.

Thereafter, when the trigger switch 10 is turned ON (S103), the PWM duty D is set to the initial value D0, and the motor 3 is activated (S104). The arithmetic part 24 performs the soft start control to gradually increase the PWM duty D from the initial value D0 to the target value D1 at a certain increasing rate α (S105).

After maintaining the PWM duty D at the first duty D1 (S203), the arithmetic part 24 monitors the voltage instantaneous value V output from the voltage detection circuit 27. Then, when the voltage instantaneous value V to be input to the inverter circuit 20 exceeds the voltage threshold value Vth (S204: YES), the arithmetic part 24 switches the PWM duty D from the first duty D1 to the second duty D2 (S205). Thereafter, when the voltage instantaneous value V is reduced to the voltage threshold value Vth (S204: NO), the arithmetic part 24 switches the PWM duty from the second duty D2 to the first duty D1 (S206).

As described above, when the voltage instantaneous value V to be input to the inverter circuit 20 exceeds the voltage threshold value Vth, the PWM duty D is reduced to the second duty D2. When the voltage instantaneous value V is less than the voltage threshold value Vth, the PWM duty D is increased to the first duty D1.

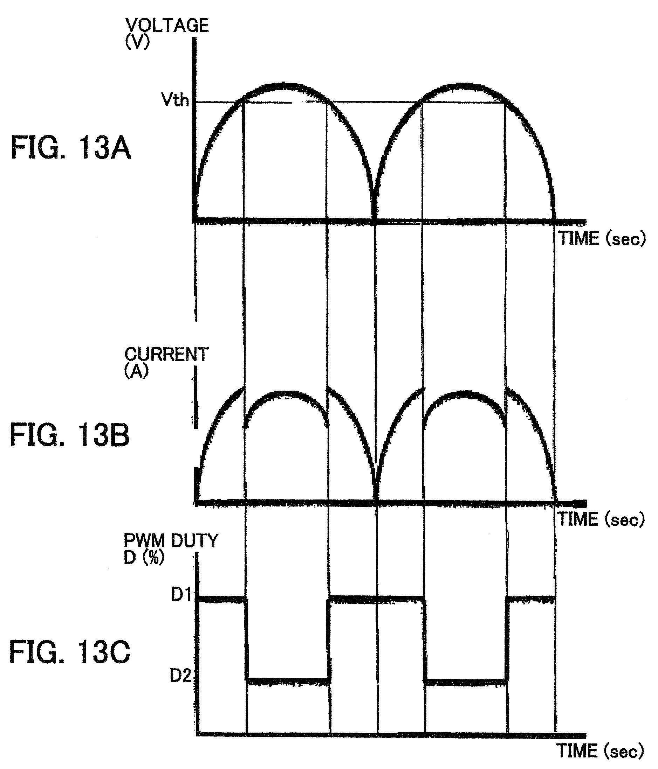

Figs. 13A, 13B and 13C are explanatory diagrams illustrating an example of drive control for the motor in the second embodiment. Fig. 13A illustrates a temporal change of the voltage to be applied to the motor 3, and Fig. 13B illustrates a temporal change of the current flowing through the motor 3. Fig. 13C illustrates a temporal change of the PWM duty D.

In the present embodiment, when the voltage instantaneous value V to be input to the inverter circuit 20 exceeds the voltage threshold value Vth, the PWM duty D is reduced from the first duty D1 to the second duty D2 (Fig. 13C). Accordingly, the current value flowing through the motor 3 is reduced (Fig. 13B). Thereafter, the PWM duty is maintained at the second duty D2 until the maximum amplitude of the voltage to be applied to the motor 3 passes and the voltage instantaneous value V to be input to the inverter circuit 20 is reduced to the voltage threshold value Vth. Therefore, even when the sudden increase in the current value occurs at the maximum amplitude of the voltage to be applied to the motor 3, the current value flowing through the motor 3 does not exceed the maximum rated value of the switching element, thereby preventing damage of the switching element.

When the voltage instantaneous value V to be input to the inverter circuit 20 is reduced to the voltage threshold value Vth, the PWM duty is increased from the second duty D2 to the first duty D1 (Fig. 13C). Accordingly, the current value flowing through the motor 3 becomes large (Fig. 13B), and the effective value of the voltage to be applied to the motor 3 also becomes large. Therefore, excessive reduction of an amount of drive power to be supplied to the motor 3 can be prevented.

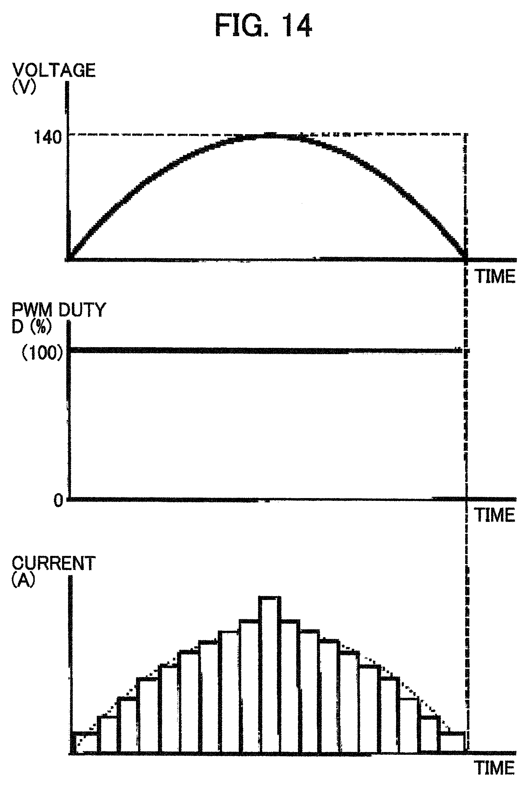

Fig. 14 is a diagram illustrating a relationship among voltage after rectification, PWM duty, and motor current at a power supply voltage of 100 V. Fig. 14 illustrates a half period of a voltage instantaneous value waveform after full-wave rectification, a half period of a PWM duty waveform, and a half period of a motor current waveform, respectively. The motor 3 is designed to optimally operate when the power supply voltage is set to 100 V (power supply voltage effective value is 100 V, voltage instantaneous value V is about 140 V), so that even when the sudden increase in the motor current occurs, the current value I does not exceed the maximum rated value of the switching element 7a. The voltage threshold value Vth is set to 140 V in this case; however, basically, the voltage instantaneous value V does not exceed the 140 V. Thus, the PWM duty D need not be reduced but maintained at substantially 100% over the entire period.

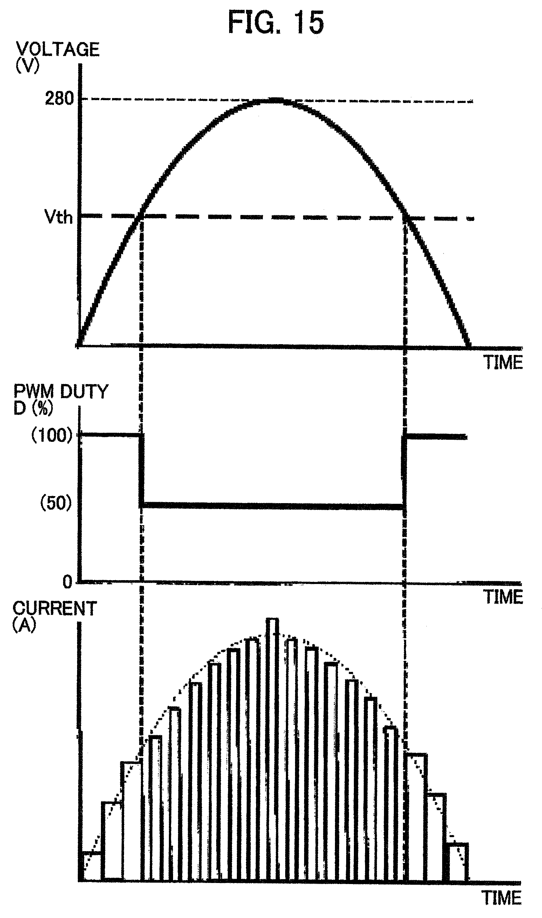

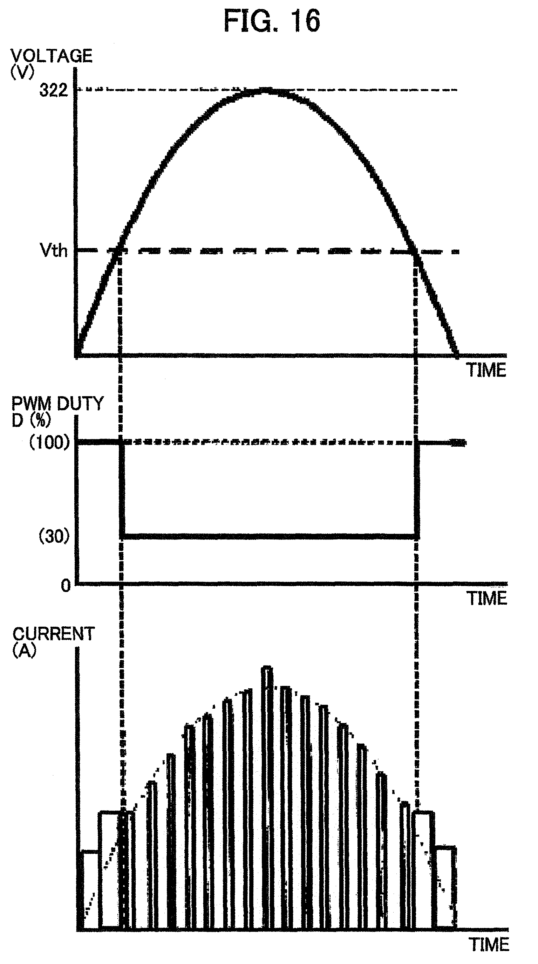

On the other hand, when power supply voltage exceeding voltage defined in the specification of the motor 3 is input, the PWM duty D is changed as illustrated in Figs. 15 and 16. Fig. 15 is a diagram illustrating a relationship among voltage after rectification, PWM duty, and motor current at a power supply voltage of 200 V and Fig. 16 is a diagram illustrating a relationship among voltage after rectification, PWM duty, and motor current at a power supply voltage of 230 V.

As illustrated in Fig. 15, when the power supply voltage effective value is 200 V, the voltage instantaneous value V after full-wave rectification is about 280 V at the maximum. When the voltage threshold value Vth is set to 140 V, the voltage instantaneous value V of the power supply voltage exceeds the voltage threshold value Vth. Thus, the PWM duty is reduced from D1 to D2 (e.g., 50% of D1) at the time when the voltage instantaneous value V exceeds the voltage threshold value Vth. As a result, as illustrated in Fig. 13B, the current value I is reduced to thereby allow prevention of damage of the switching element 7a.

When the power supply voltage effective value is 230 V, the voltage instantaneous value V after full-wave rectification is about 322 V at the maximum, as illustrated in Fig. 16. When the voltage threshold value Vth is set to 140 V, the voltage instantaneous value V of the power supply voltage exceeds the voltage threshold value Vth. Thus, the PWM duty is reduced more than in the case where the power supply voltage effective value is set to 200 V (e.g., 30% of D1). As a result, as illustrated in Fig. 13B, the current value I is reduced to thereby allow prevention of damage of the switching element 7a.

As described above, by reducing the PWM duty D2 as the power supply voltage becomes higher, the current value can be suppressed to thereby prevent damage of the switching element 7a. Further, as illustrated in Fig. 4, by reducing the PWM duty D1 at a normal time as the power source voltage becomes larger, the current value in the entire impact driver 1 can be suppressed to thereby further prevent the switching element 7a from being damaged.

As described above, in the impact driver according to the second embodiment, the PWM duty is reduced only when the voltage instantaneous value to be input to the inverter circuit exceeds the voltage threshold value. This can suppress the current value to be input to the inverter circuit without excessively reducing the drive power to be supplied to the motor. Thus, occurrence of overcurrent can be prevented while maintaining the motor drive power to thereby prevent damage of the switching element.

Next, the impact driver according to a third embodiment will be described. In the present embodiment, the impact driver 1 performs switching of the PWM duty D on the basis of an elapsed time t from a zero-cross point to be described later.

In the present embodiment, the voltage detection circuit 27 also serves as a zero-cross detection unit of the present invention and detects a zero-cross point at which the voltage instantaneous value V to be input to the inverter circuit 20 becomes 0.

Further, in the present embodiment, the arithmetic part 24 also serves as a period detection unit of the present invention and measures a time between the two consecutive zero-cross points detected by the voltage detection circuit 27 by using a timer 24d to acquire a half period T0 of AC power output from the commercial AC power supply 30. Further, the arithmetic part 24 measures the elapsed time t from the zero-cross point by using the timer 24d.

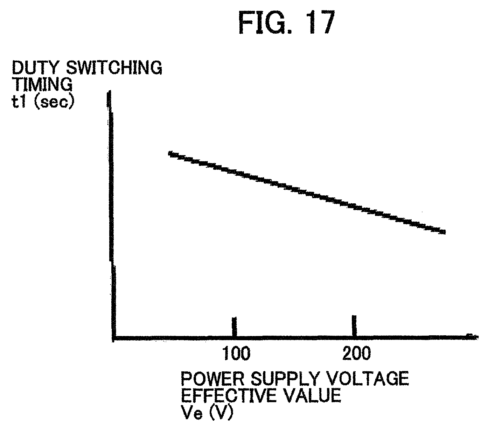

The ROM 24b of the arithmetic part 24 stores a duty switching timing t1 corresponding to the power supply voltage effective value Ve. Fig. 17 is a diagram illustrating a relationship between the power supply voltage effective value and duty switching timing in the impact driver according to the third embodiment. The duty switching timing t1 corresponds to a first time threshold value of the present invention. As illustrated in Fig. 17, the duty switching timing t1 stored in the arithmetic part 24 becomes earlier as the power supply voltage effective value Ve becomes higher. The arithmetic part 24 sets the duty switching timing t1 according to the power supply voltage effective value Ve of the commercial power supply 30.

Further, the arithmetic part 24 sets a value obtained by subtracting a value corresponding to the duty switching timing t1 from the half period T0 as a duty switching timing t2. The duty switching timing t2 corresponds to a second time threshold value of the present invention. Hereinafter, the two duty switching timings t1 and t2 set by the arithmetic part 24 are referred to as a first switching timing t1 and a second switching timing t2, respectively. The first switching timing t1, the second switching timing t2, and the half period T0 satisfy a relationship of t1 < t2 < T0. The arithmetic part 24 performs switching of the PWM duty D on the basis of the set first and second switching timings t1 and t2.

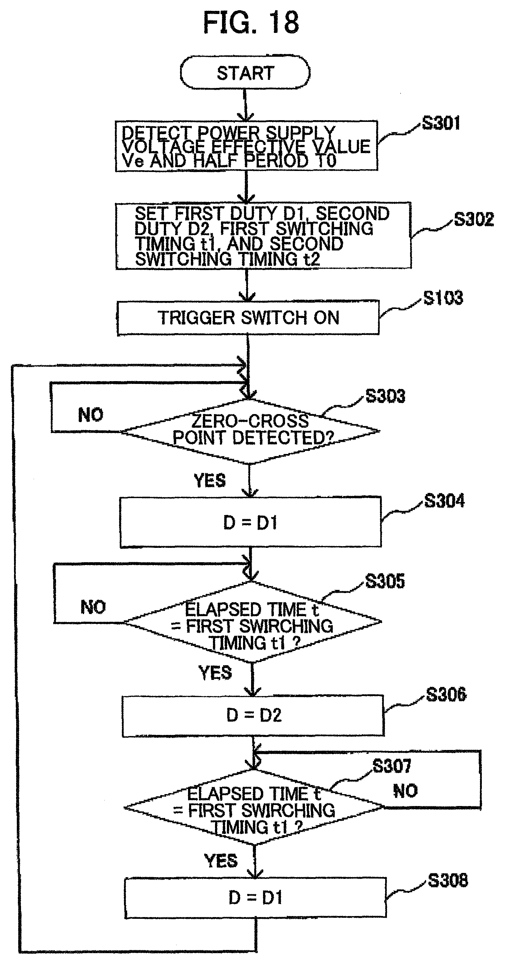

The following describes an operation of changing the PWM duty D in the impact driver 1 according to the third embodiment along a flowchart illustrated in Fig. 18. Fig. 18 is a flowchart illustrating operation of the impact driver according to the third embodiment.

The flowchart of Fig. 18 is started when the power cord 8 is connected to the commercial AC power supply 30. The voltage detection circuit 27 measures the power supply voltage effective value Ve of the commercial AC power supply 30 and outputs the measured value Ve to the arithmetic part 24 (S301). Further, the arithmetic part 24 detects the half period T0 of the power output from the commercial AC power supply 30 by using the timer 24d (S301).

Subsequently, the arithmetic part 24 sets the first and second duties D1 and D2 corresponding to the power supply voltage effective value Ve on the basis of the data illustrated in Fig. 4 (S302). Further, the arithmetic part 24 sets the duty switching timings t1 and t2 (S302). The arithmetic part 24 sets the first switching timing t1 corresponding to the power supply voltage effective value Ve on the basis of the data illustrated in Fig. 17. At this time, the higher the power supply voltage effective value Ve is, the earlier the first switching timing t1 is set. Further, the arithmetic part 24 sets a value obtained by subtracting a value corresponding to the set first switching timing t1 from the acquired half period T0 as the second switching timing t2.

Thereafter, when the trigger switch 10 is turned ON (S103), the arithmetic part 24 monitors the voltage instantaneous value V output from the voltage detection circuit 27. Then, when the zero-cross point at which the voltage instantaneous value V becomes 0 is detected (S303: YES), the arithmetic part 24 starts measuring an elapsed time t from the zero-cross point by using the timer 24d. At the same time, the arithmetic part 24 sets the PWM duty D to the first duty D1 (S304) and activates the motor 3.

Then, when the elapsed time t from the zero-cross point reaches the first switching timing t1 (S305: YES), the arithmetic part 24 switches the PWM duty D from the first duty D1 to the second duty D2 (S306).

The arithmetic part 24 continues measuring the elapsed time t by using the timer 24d. Then, when the elapsed time t reaches the second switching timing t2 (S307: YES), the arithmetic part 24 switches the PWM duty D from the second duty D2 to the first duty D1 (S308).

Thereafter, the arithmetic part 24 monitors the voltage instantaneous value V. Then, when the zero-cross point is newly detected (S303: YES), the arithmetic part 24 newly starts measuring the elapsed time t from the detected zero-cross point and repeats the processing of the step S304 and subsequent steps.

As described above, when the elapsed time t from the zero-cross point reaches the first switching timing t1, the PWM duty D is reduced to the second duty D2. When the elapsed time t reaches the second switching timing t2, the PWM duty D is increased to the first duty D1.

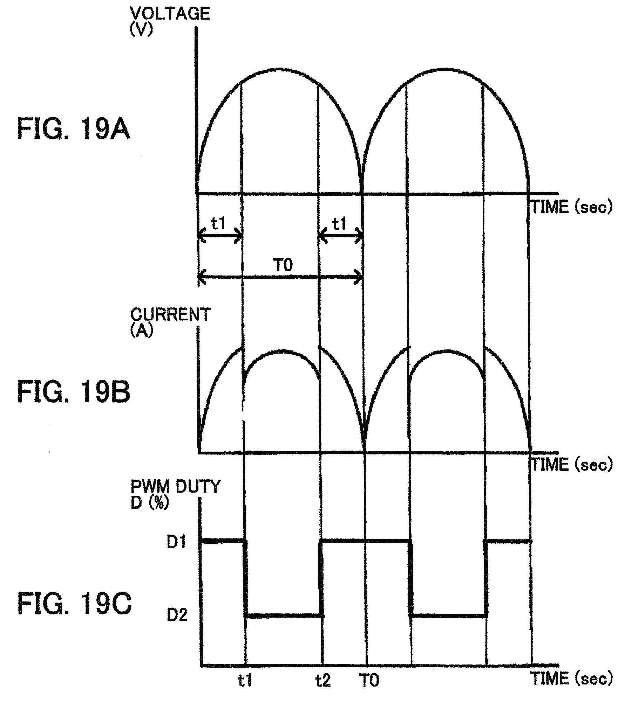

Figs. 19A, 19B and 19C are explanatory diagrams illustrating an example of drive control for the motor in the third embodiment. Fig. 19A illustrates a temporal change of the voltage to be applied to the motor 3, and Fig. 19B illustrates a temporal change of the current flowing through the motor 3. Fig. 19C illustrates a temporal change of the PWM duty.

In the present embodiment, the PWM duty D is reduced to D2 (Fig. 19C) around the maximum amplitude of the voltage to be applied to the motor 3, i.e., in a range where the elapsed time t from the zero-cross point is between t1 and t2 to reduce the current value flowing through the motor 3 (Fig. 19B). Therefore, even when the sudden increase in the current value occurs at the maximum amplitude of the voltage to be applied to the motor 3, the current value flowing through the motor 3 does not exceed the maximum rated value of the switching element, thereby preventing damage of the switching element.

Further, the PWM duty D is increased from the second duty to the first duty around the zero-cross point (Fig. 19C), the current value flowing through the motor 3 becomes large (Fig. 19B), and the effective value of the voltage to be applied to the motor 3 also becomes large. Therefore, excessive reduction of an amount of drive power to be supplied to the motor 3 can be prevented.

As described above, in the impact driver according to the third embodiment, switching control of the PWM duty is performed on the basis of the elapsed time from the zero-cross point of the voltage instantaneous value to be input to the inverter circuit. Thus, by simple control, occurrence of overcurrent can be prevented while maintaining the motor drive power to thereby prevent damage of the switching element. Further, by performing the switching control on the basis of the elapsed time from the zero-cross point, the PWM duty can be reduced in an early stage before increase in the motor current, damage of the switching element can be prevented more reliably. The elapsed time from the zero-cross point may be previously determined by experiments.

Next, the impact driver 1 according to a fourth embodiment will be described. In the present embodiment, the impact driver 1 performs switching of the PWM duty D on the basis of the current value I to be input to the inverter circuit 20 and elapsed time t from the zero-cross point.

In the present embodiment, the ROM 24b of the arithmetic part 24 stores the current threshold value Ith (Fig. 6) corresponding to the power supply voltage effective value Ve and first switching timing t1 (Fig. 17) corresponding to the power supply voltage effective value Ve. The arithmetic part 24 sets the current threshold value Ith and the first switching timing t1 according to the power supply voltage effective value Ve of the commercial AC power supply 30.

Further, the arithmetic part 24 acquires the half period T0 of the AC power output from the commercial AC power supply 30 and sets a value obtained by subtracting a value corresponding to the first switching timing t1 from the half period T0 as the second duty switching timing t2. The arithmetic part 24 performs switching of the PWM duty D based on the set current threshold value Ith and the set first and second switching timings t1 and t2.

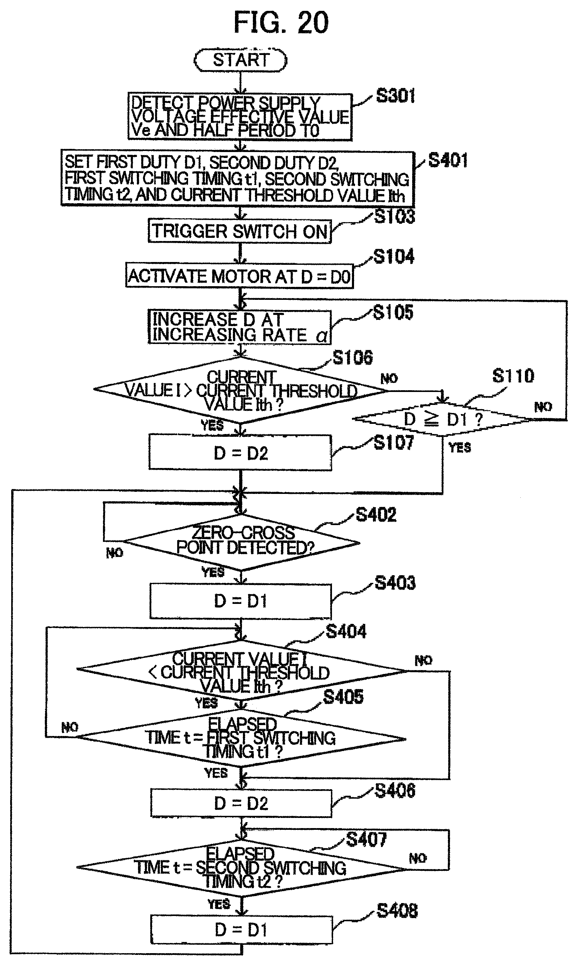

The following describes an operation of changing the PWM duty D in the impact driver 1 according to the fourth embodiment along a flowchart illustrated in Fig. 20. Fig. 20 is a flowchart illustrating operation of the impact driver according to the fourth embodiment.

The flowchart of Fig. 20 is started when the power cord 8 is connected to the commercial AC power supply 30. The voltage detection circuit 27 measures the power supply voltage effective value Ve of the commercial AC power supply 30 and outputs the measured value Ve to the arithmetic part 24 (S301). The arithmetic part 24 acquires the half period T0 of the AC power output from the commercial AC power supply 30 using the timer 24d(S301).

Subsequently, the arithmetic part 24 sets the first and second duties D1 and D2 corresponding to the power supply voltage effective value Ve on the basis of the data illustrated in Fig. 4 (S401). Further, the arithmetic part 24 sets the current threshold value Ith, first switching timing t1, and second switching timing t2 (S401). The arithmetic part 24 sets the current threshold value Ith corresponding to the power supply voltage effective value Ve on the basis of the data illustrated in Fig. 6. Further, the arithmetic part 24 sets the first switching timing t1 corresponding to the power supply voltage effective value Ve based on the data illustrated in Fig. 17. Further, the arithmetic part 24 sets a value obtained by subtracting a value corresponding to the first switching timing t1 from the half period T0 as the second switching timing t2.

Thereafter, when the trigger switch 10 is turned ON (S103), the PWM duty D is set to the initial value D0, and the motor 3 is activated (S104). The arithmetic part 24 performs the soft start control to gradually increase the PWM duty D from the initial value D0 to the target value D1 at a certain increasing rate α (S105).

Further, the arithmetic part 24 monitors the current value I output from the current detection circuit 26. Then, when the current value I exceeds the current threshold value Ith (S106: YES), the arithmetic part 24 sets the PWM duty D to the second duty D2 (S107). When the PWM duty D reaches the first duty D1 (S110: YES) before the current value I exceeds the current threshold value Ith (S106: NO), the arithmetic part 24 stops increasing the PWM duty D and maintains the same at the first duty D1. When the PWM duty D is less than the first duty D1 (S110: NO), the arithmetic part 24 continues increasing the PWM duty D (S105) until the PWM duty D reaches the first duty D1 (S110: YES) or until the current value I exceeds the current threshold value Ith (S106: YES).

After stopping increasing the PWM duty D, the arithmetic part 24 monitors the voltage instantaneous value V output from the voltage detection circuit 27. Then, when the zero-cross point is detected (S402: YES), the arithmetic part 24 starts measuring the elapsed time t from the zero-cross point by using the timer 24d and switches the PWM duty D to the first duty D1 (S403).

Then, when the current value I is less than the current threshold value Ith (S404: YES), the arithmetic part 24 switches the PWM duty D to the second duty D2 (S406) after the elapsed time t1 from the zero-cross point reaches the first switching timing t1 (S405: YES). Further, when the current value I reaches the current threshold value Ith (S404: NO) before the elapsed time t1 from the zero-cross point reaches the first switching timing t1 (S405: NO), the arithmetic part 24 switches the PWM duty to the second duty D2 (S406).

When the elapsed time t from the zero-cross point reaches the second switching timing t2 (S407: YES) after the PWM duty D is switched to the second duty D2 (S406), the arithmetic part 24 switches the PWM duty D to the first duty D1 (S408).

Thereafter, the arithmetic part 24 monitors the voltage instantaneous value V. Then, when the zero-cross point is newly detected (S402: YES), the arithmetic part 24 newly starts measuring the elapsed time t from the detected zero-cross point and repeats the processing of the step S403 and subsequent steps.

As described above, even before the elapsed time t from the zero-cross point reaches the first switching timing t1, the PWM duty D is reduced to the second duty D2 when the current value I to be input to the inverter circuit 20 exceeds the current threshold value Ith.

As described above, in the impact driver according to the fourth embodiment, switching of the PWM duty is performed based on not only the elapsed time from the zero-cross point of the voltage instantaneous value to be input to the inverter circuit, but also the current value, so that occurrence of overcurrent can be prevented reliably. Thus, maintenance of the motor drive power and prevention of damage of the switching element can be reliably realized.

While the present description has been made in detail with reference to specific embodiments in which the present invention is applied to the impact driver, the present invention is not limited to the above-described embodiments. Various changes and modification may be made therein without departing from the spirit and scope of the following claims. In the fourth embodiment, the PWM duty is controlled based on both the current value and zero-cross point; alternatively, however, a plurality of factors may be combined to perform the control, such as current value and power supply voltage, power supply voltage and zero-cross point, or current value, power supply voltage, and zero-cross point. In these cases, overcurrent prevention effect can be reliably obtained as in the fourth embodiment.

### [Reference Signs List]

- 1: impact driver
- 3: motor
- 7: inverter circuit part
- 7a: switching element
- 10: trigger switch
- 20: inverter circuit
- 22: control signal output circuit
- 23: rectifying circuit
- 24: arithmetic part
- 26: current detection circuit
- 27: voltage detection circuit
- 30: commercial AC power supply

## Claims

1. A power tool comprising:
a motor;
a rectifying circuit configured to rectify an input voltage from a commercial power supply; and
a supply unit configured to supply a rectified voltage output from the rectifying circuit to the motor as drive power,
wherein duty control for the motor is changed according to a voltage of the commercial power supply.

2. The power tool according to claim 1, wherein a duty ratio applied to the motor is changed according to the voltage of the commercial power supply.

3. The power tool according to claim 2, wherein the duty ratio is set to a first duty ratio when the voltage of the commercial power supply is a first voltage value, and the duty ratio is set to a second duty ratio when the voltage of the commercial power supply is a second voltage value, the second duty ratio being smaller than the first duty ratio.

4. The power tool according to claim 2 or 3, wherein the higher the voltage of the commercial power supply is, the smaller the duty ratio is set.

5. The power tool according to any one of claims 2 to 4, wherein the duty ratio is maintained at constant until the voltage of the commercial power supply is a predetermined voltage, and the duty ratio is decreased with increasing the voltage of the commercial power supply when the voltage of the commercial power supply is higher than the predetermined voltage.

6. The power tool according to any one of claims 2 to 5, wherein the duty ratio is decreased after the rectified voltage exceeds a voltage threshold value.

7. The power tool according to claim 6, wherein the duty ratio is decreased for a predetermined time duration after the rectified voltage exceeds the voltage threshold value.

8. The power tool according to claim 7, wherein the duty ratio is increased after the predetermined time duration.

9. The power tool according to claim 6, wherein the duty ratio is increased when the rectified voltage becomes lower than the voltage threshold value after the duty ratio is decreased.

10. The power tool according to claim 8 or 9, wherein the duty ratio is increased until the duty ratio is restored to the decreased duty ratio.

11. The power tool according to any one of claims 2 to 5, wherein the duty ratio is decreased after current flowing through the motor exceeds a current threshold value.

12. The power tool according to claim 11, wherein the duty ratio is increased when the current becomes smaller than the current threshold value after the duty ratio is decreased.

13. The power tool according to claim 12, wherein the duty ratio is restored to the decreased duty ratio.

14. The power tool according to any one of claims 11 to 13, wherein the higher the voltage of the commercial power supply is, the smaller the current threshold value is set.

15. The power tool according to any one of claims 2 to 5, wherein a zero-cross point of the commercial power supply is detected, and
wherein the duty ratio is decreased when an elapsed time from detection of the zero-cross point exceeds a first time duration, and the duty ratio is increased when the elapsed time exceeds a second time duration, the second time duration being longer than the first time duration.

16. The power tool according to claim 15, wherein the higher the voltage of the commercial power supply is, the shorter the first time duration is set.

17. The power tool according to any one of claims 1 to 16, wherein the rectified voltage is supplied to the supply unit without being smoothed.

18. A power tool comprising:
a motor;
a supply unit configured to supply drive power from a power supply to the motor; and
a suppression unit configured to suppress occurrence of overcurrent where current flowing through the motor exceeds a predetermined current value.

19. The power tool according to claim 18, wherein the suppression unit includes a change unit configured to change an effective value of the drive power.

20. The power tool according to claim 19, further comprising a current detection unit configured to detect a current value input to the supply unit,
wherein the change unit is configured to decrease the effective value when the current value detected by the current detection unit exceeds a current threshold value.

21. The power tool according to claim 20, further comprising a power supply voltage detection unit configured to detect a power supply voltage effective value of the power supply,
wherein the change unit is configured to set the current threshold value according to the power supply voltage effective value detected by the power supply voltage detection unit.

22. The power tool according to claim 19, further comprising an input voltage detection unit configured to detect an instantaneous voltage value input to the supply unit,
wherein the change unit is configured to decrease the effective value when the instantaneous voltage value detected by the input voltage detection unit exceeds a voltage threshold value.

23. The power tool according to claim 22, further comprising a power supply voltage detection unit configured to detect power supply voltage effective value of the power supply,
wherein the change unit is configured to set the voltage threshold value according to the power supply voltage effective value detected by the power supply voltage detection unit.

24. The power tool according to claim 19, further comprising a zero-cross detection unit configured to detect a zero-cross point of AC power input to the supply unit,
wherein the change unit is configured to decrease the effective value when an elapsed time from detection of the zero-cross point exceeds a first time threshold value, and increase the effective value when the elapsed time exceeds a second time threshold value larger than the first time threshold value.

25. The power tool according to claim 24, further comprising a power supply voltage detection unit configured to detect a power supply voltage effective value of the power supply; and
a period detection unit configured to detect a half period of the AC power,
wherein the change unit is configured to set the first time threshold value according to the power supply voltage effective value detected by the power supply voltage detection unit, and set a value obtained by subtracting the first time threshold value from the half period detected by the period detection unit as the second time threshold value.

26. The power tool according to any one of claims 19 to 25, wherein the supply unit is an inverter circuit, and the change unit is configured to change a duty ratio of the drive power supplied from the inverter circuit to the motor.

27. The power tool according to any one of claims 18 to 26, wherein the power supply is a commercial power supply, and the supply unit is configured to supply a voltage of the commercial power supply to the motor without smoothing the voltage.
